# EUROPEAN PATENT APPLICATION

(11) **EP 4 366 207 A1**
(43) Date of publication of application: **08.05.2024**
(21) Application number: 23206699.3
(22) Date of filing: 30.10.2023
(51) Int. Cl.: H04L 1/1829, H04L 1/1867, H04W 36/00, H04L 1/00

(54) **HANDLING LOSSLESS DATA DELIVERY DURING INDIRECT PATH SWITCHING OF SIDELINK-BASED USER EQUIPMENT TO NETWORK RELAY**

(30) Priority: 04.11.2022 US 202263422879 P
(71) Applicant: Nokia Technologies Oy, 02610 Espoo (FI)
(72) Inventor: YU, Ling, Kauniainen (FI); VAN PHAN, Vinh, Oulu (FI); WOLFNER, György Tamás, Budapest (HU)
(74) Representative: Nokia EPO representatives

(57) **Abstract**

Systems, methods, apparatuses, and computer program products for handling lossless data delivery during indirect path switching of sidelink based user equipment to network relay are provided. For example, a method can include relaying communication between a remote user equipment and an access network entity via a relay user equipment over a first and a second link between the relay user equipment and the access network entity. The method can also include storing data associated with the communication after acknowledging the reception of the data to a transmitting entity, and before receiving confirmation of delivery to a receiving entity. The method can further include detecting a trigger condition associated with the communication is met and providing an indication to the transmitting entity indicating that the data stored in the relay user equipment has been acknowledged to the transmitting entity but has not been confirmed by the receiving entity.

## Description

### FIELD:

Some example embodiments may generally relate to communications including mobile or wireless telecommunication systems, such as Long Term Evolution (LTE) or fifth generation (5G) radio access technology or new radio (NR) access technology, or other communications systems including subsequent generations of the same or similar standards. For example, certain example embodiments may generally relate to handling lossless data delivery during indirect path switching of sidelink based user equipment to network relay.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. A 5G system is mostly built on a 5G new radio (NR), but a 5G (or NG) network can also build on the E-UTRA radio. From release 18 (Rel-18) onward, 5G is referred to as 5G advanced. It is estimated that NR provides bitrates on the order of 10-20 Gbit/s or higher, and can support at least service categories such as enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. The next generation radio access network (NG-RAN) represents the RAN for 5G, which can provide both NR and LTE (and LTE-Advanced) radio accesses. It is noted that, in 5G, the nodes that can provide radio access functionality to a user equipment (i.e., similar to the Node B, NB, in UTRAN or the evolved NB, eNB, in LTE) may be named next-generation NB (gNB) when built on NR radio and may be named next-generation eNB (NG-eNB) when built on E-UTRA radio. 6G is currently under development and may replace 5G and 5G advanced.

### SUMMARY:

An embodiment may be directed to an apparatus. The apparatus may include at least one processor and at least memory storing instructions. The instructions, when executed by the at least one processor, may cause the apparatus at least to perform relaying communication between a remote user equipment and an access network entity via the apparatus over a first link between the remote user equipment and the apparatus and a second link between the apparatus and the access network entity. The instructions, when executed by the at least one processor, may also cause the apparatus at least to perform storing data associated with the communication after acknowledging the reception of the data to a transmitting entity of one of the remote user equipment and the access network entity, and before receiving confirmation of delivery to a receiving entity of one of the remote user equipment and the access network entity. The instructions, when executed by the at least one processor, may further cause the apparatus at least to perform detecting a trigger condition associated with the communication is met. The instructions, when executed by the at least one processor, may additionally cause the apparatus at least to perform providing an indication to the transmitting entity indicating that the data stored in the apparatus has been acknowledged to the transmitting entity but has not been confirmed by the receiving entity.

An embodiment may be directed to an apparatus. The apparatus may include at least one processor and at least memory storing instructions. The instructions, when executed by the at least one processor, may also cause the apparatus at least to perform communicating via a relay user equipment, which relays communication between a remote user equipment and an access network element over a first link and a second link. Data associated with the communication can be stored at the relay user equipment after acknowledging the reception of the data to a transmitting entity of one of the remote user equipment and the access network element, and before receiving confirmation of delivery to a receiving entity of one of the remote user equipment and the access network element. The instructions, when executed by the at least one processor, may also cause the apparatus at least to perform receiving an indication that the data is stored in the relay user equipment. The instructions, when executed by the at least one processor, may further cause the apparatus at least to perform determining a further action comprising data forwarding or retransmission based on the indication.

An embodiment may be directed to a method. The method can include relaying communication between a remote user equipment and an access network entity via a relay user equipment over a first link between the remote user equipment and the relay user equipment and a second link between the relay user equipment and the access network entity;. The method can also include storing data associated with the communication after acknowledging the reception of the data to a transmitting entity of one of the remote user equipment and the access network entity, and before receiving confirmation of delivery to a receiving entity of one of the remote user equipment and the access network entity. The method can further include detecting a trigger condition associated with the communication is met. The method can additionally include providing an indication to the transmitting entity indicating that the data stored in the relay user equipment has been acknowledged to the transmitting entity but has not been confirmed by the receiving entity.

An embodiment may be directed to a method. The method can include communicating via a relay user equipment, which relays communication between a remote user equipment and an access network element over a first link and a second link. Data associated with the communication can be stored at the relay user equipment after acknowledging the reception of the data to a transmitting entity of one of the remote user equipment and the access network element, and before receiving confirmation of delivery to a receiving entity of one of the remote user equipment and the access network element. The method can also include receiving an indication that the data is stored in the relay user equipment. The method can further include determining a further action comprising data forwarding or retransmission based on the indication.

An embodiment can be directed to an apparatus. The apparatus can include means for relaying communication between a remote user equipment and an access network entity via the apparatus over a first link between the remote user equipment and the apparatus and a second link between the apparatus and the access network entity. The apparatus can also include means for storing data associated with the communication after acknowledging the reception of the data to a transmitting entity of one of the remote user equipment and the access network entity, and before receiving confirmation of delivery to a receiving entity of one of the remote user equipment and the access network entity. The apparatus can further include means for detecting a trigger condition associated with the communication is met. The apparatus can additionally include means for providing an indication to the transmitting entity indicating that the data stored in the apparatus has been acknowledged to the transmitting entity but has not been confirmed by the receiving entity.

An embodiment can be directed to an apparatus. The apparatus can include means for means for communicating via a relay user equipment, which relays communication between a remote user equipment and an access network element over a first link and a second link. Data associated with the communication can be stored at the relay user equipment after acknowledging the reception of the data to a transmitting entity of one of the remote user equipment and the access network element, and before receiving confirmation of delivery to a receiving entity of one of the remote user equipment and the access network element. The apparatus can also include means for receiving an indication that the data is stored in the relay user equipment. The apparatus can further include means for determining a further action comprising data forwarding or retransmission based on the indication.

### BRIEF DESCRIPTION OF THE DRAWINGS:

For proper understanding of example embodiments, reference should be made to the accompanying drawings, wherein:
FIG. 1 illustrates a signaling flow and processing diagram of a method according to certain embodiments;
FIG. 2 illustrates a method according to certain embodiments; and
FIG. 3 illustrates an example block diagram of a system, according to an embodiment.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for providing handling lossless data delivery during indirect path switching of sidelink based user equipment to network relay, is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Certain embodiments may have various aspects and features. These aspects and features may be applied alone or in any desired combination with one another. Other features, procedures, and elements may also be applied in combination with some or all of the aspects and features disclosed herein.

Additionally, if desired, the different functions or procedures discussed below may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

Certain embodiments relate to the enhancement of third generation partnership project (3GPP) release 18 (Rel-18) new radio (NR) sidelink (SL) relay. More specifically, certain embodiments relate to enhancement of service continuity for single-hop layer 2 (L2) user equipment (UE) to network (NW) (UE-to-NW or U2N) relay. There can be at least four scenarios of single-hop L2 UE-to-NW relay, labelled as A to D for convenience only and not by way of order, preference, or priority. The network element may be a next generation node B (gNB) or other base station or access point. A direct path from a UE to the network passes over the air interface between the UE and the network, referred to as the Uu interface.

In scenario A there may be inter-gNB indirect-to-direct path switching. For example, "remote UE <-> relay UE A <-> gNB X" may be switched to "remote UE <-> gNB Y".

In scenario B there may be inter-gNB direct-to-indirect path switching. For example, "remote UE <-> gNB X" may be switched to "remote UE <-> relay UE A <-> gNB Y".

In scenario C there may be intra-gNB indirect-to-indirect path switching. For example, "remote UE <-> relay UE A <-> gNB X" may be switched to "remote UE <-> relay UE B <-> gNB X".

In scenario D there may be inter -gNB indirect-to-indirect path switching. For example, "remote UE<-> relay UE A <-> gNB X" may be switched to "remote UE <-> relay UE B <-> gNB Y".

In particular, certain embodiments relate to support of lossless data delivery between the gNB and the remote UE in the scenarios in which an indirect path was established for the remote UE before inter-gNB or intra-gNB path switching is configured, such as scenarios A, C and D.

When an indirect path via the relay UE is established between the gNB and the remote UE, the remote UE's data may be delivered to the relay UE from either the remote UE for uplink (UL) data or from the gNB for DL (downlink) data. The remote UE's data may be acknowledged via either sidelink (SL) or Uu hybrid automatic repeat request (HARQ)/ automatic repeat request (ARQ) acknowledgment (ACK) feedback by the relay UE in the first hop. The relay UE may not be able to deliver the received data from the gNB to the remote UE, for DL data, or from the remote UE to the gNB, for UL data, in the second hop. This inability may be due to, for example, poor link quality of Uu or SL. As indirect-to-direct or indirect-to-indirect path switching may be mainly triggered due to either poor Uu link between source relay UE and the gNB or poor SL link between source relay UE and the remote UE, the not-yet-delivered data in second hop by source relay UE may be a typical scenario that may result in fewer instances of lossless data delivery in U2N relay.

A data recovery function may be performed in the packet data convergence protocol (PDCP) layer to handle data loss. The data recovery approach may be to perform retransmission for data protocol data units (PDUs) for which successful delivery has not been confirmed by the lower layers.

On the other hand, if the transmitting PDCP entity in the indirect path of a U2N relay follows the same behavior as in normal direct path, the transmitting PDCP entity would not retransmit the PDCP data PDU that has been sent to the relay UE and has been acknowledged as having successful delivery of the data to the relay UE using HARQ/ARQ ACK feedback from the relay UE in the first hop as the lower layers (e.g. radio link control (RLC) or medium access control (MAC) layer) under PDCP in U2N relay may have a hop specific protocol layer. Nevertheless, even if the relay UE confirmed the successful delivery of the data PDU in the first hop, the data PDU may not be delivered successfully to the receiving PDCP entity, for example to a remote UE for DL data, due to the failure of data delivery in second hop as mentioned above. Thus, data loss may happen if the transmitting PDCP entity follows the same behavior as for direct path communications.

Similarly, user plane (UP) handling during handover (HO) may handle data loss by having the UE re-transmit starting from the oldest PDCP service data unit (SDU) that has not been acknowledged at the radio link control (RLC) layer in the source cell.

During inter-gNB indirect-to-direct or indirect-to-indirect path switching, if the remote UE does not retransmit to the target gNB the UL PDCP SDUs that have been acknowledged by the relay UE over SL and the relay UE is not able to deliver the received PDCP SDUs to the source gNB due to, for example, poor Uu link quality between the relay UE and the source gNB, the UL PDCP SDUs would be lost.

Certain embodiments may avoid or limit such data loss issues during indirect path switching for U2N relay in an effective way.

Certain embodiments utilize the awareness of data transmission status by the relay UE for both UL and DL. Certain embodiments efficiently and effectively trigger the relay UE to send an indication to inform the transmitting entity that there is the remote UE's data stored in the relay UE that has been acknowledged to the transmitting entity in the first hop but has not been delivered to the receiving entity in the second hop of U2N relay indirect path. The transmitting entity can be the gNB for DL and can be the remote UE for UL.

Various triggers may be used to trigger sending the indication of certain embodiments. One trigger may be when the relay UE detects radio link failure (RLF) in at least one of Uu for UL data transmission or RLF in SL for DL data transmission.

Another trigger may be when the relay UE detects the buffered not-yet-delivered data amount has exceeded a configured threshold. The threshold may be a total threshold for UL and DL combined, or separate thresholds for UL and DL. If separate thresholds are used, the threshold amount may be different for UL than for DL.

A further trigger may be when the gNB configures the relay UE to release the Uu and PC5 RLC channel configuration for the connected remote UE due to, for example, indirect path switching. The trigger may simply be the command or instruction to release, regardless of the cause for the release. Alternatively, the trigger may depend on an identified cause for the release.

An additional trigger may be when the gNB or the remote UE sends a request to the relay UE for providing such indication. The command or instruction may relate to a single time or may be a request to provide such information periodically. For example, the remote UE and/or the gNB may request that a report similar to a buffer status report be provided on a regular basis with respect to the indirect path. In a case where the gNB sends the request, the relay UE may provide the indication to the gNB and/or the remote UE. Likewise, in a case where the remote UE sends the request, the relay UE may provide the indication to the remote UE and/or the gNB.

The indication can be variously implemented. For example, the indication may simply be a one-bit indication that there is, in fact, data PDU in the relay UE buffer that has been acknowledged to the transmitting entity in the first hop and has not been delivered to the receiving entity successfully in the second hop. As another option, the one-bit indicator could indicate that a predetermined threshold amount of data is stored in the relay UE of data PDU in the relay UE buffer that has been acknowledged to the transmitting entity in the first hop and has not been delivered to the receiving entity successfully in the second hop.

Additionally or alternatively, the indication can include the number of transport blocks (TBs) or RLC PDUs that have been acknowledged to the transmitting entity in the first hop and have not been delivered to the receiving entity successfully in the second hop. The sequence numbers (SNs) of such RLC PDUs or the earliest SNs of such RLC PDUs may be indicated as well.

The indication may be transmitted from the relay UE to the gNB or the remote UE, for example using UL control information (UCI) over Uu, using SL control Information (SCI) over SL, or using a medium access control (MAC) control element (CE) or RRC control singaling over either Uu or SL.

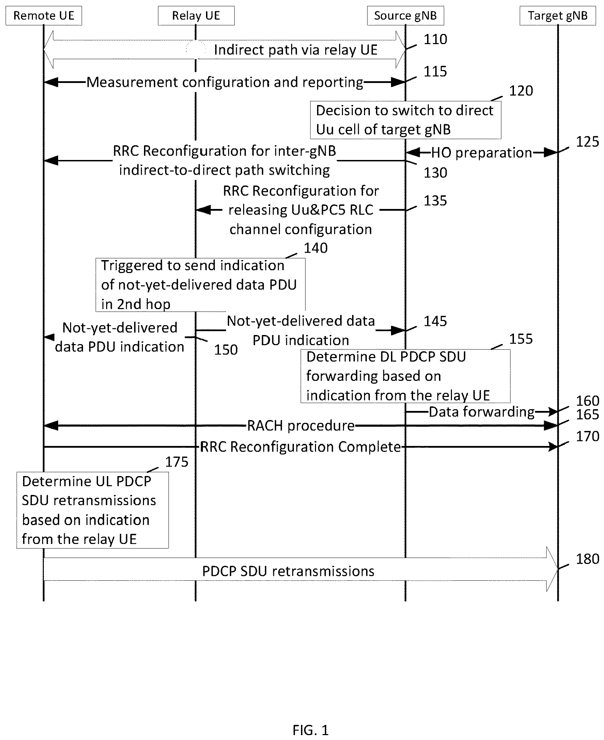

FIG. 1 illustrates a signaling flow and processing diagram of a method according to certain embodiments. One implementation example is illustrated in FIG. 1 for the scenario of inter-gNB indirect-to-direct path switching.

As shown in FIG. 1, at 110 the remote UE can have established the indirect path via the relay UE to the source gNB. At 115, the gNB can configure the remote UE on the Uu and PC5 radio link measurements. Based on Uu and PC5 measurement reports from the remote UE, at 120 the source gNB can make the decision to switch the remote UE to the direct Uu connection with the cell under the control of the target gNB.

Upon the decision, a HO preparation procedure may be performed between the source gNB and target gNB. Upon a successful HO preparation procedure at 130, the source gNB can send a radio resource control (RRC) reconfiguration message to the remote UE for configuring the inter-gNB indirect-to-direct path switching. At 135, the source gNB can also send the RRC reconfiguration message to the relay UE for releasing the configuration of Uu and PC5 RLC channels that the relay UE used to relay remote UE's data.

Based on the RRC reconfiguration message provided at 135, at 140 the relay UE may be triggered to send the indication of not-yet-delivered data PDUs as discussed above. The trigger may be implicit by receiving the RRC reconfiguration message. As another alternative, an explicit trigger indication may be included in the RRC reconfiguration message as a request indication. As yet another alternative, an explicit request message from gNB may be provided either as an RRC message or a MAC CE control signaling. The message may be transmitted to the relay UE along with the RRC Reconfiguration message.

Additionally, although not illustrated in FIG. 1, the trigger of sending not-yet-delivered data PDU indication may be a request from the remote UE. For instance, when the remote UE gets RRC reconfiguration message at 130 from the gNB for configuring indirect-to-direct path switching, the remote UE may send a request over SL to the remote UE to trigger the relay UE for providing the not-yet-delivered data PDU indication. The non-yet-delivered data PDU indication may be sent to the source gNB at 145 and/or to the remote UE at 150.

As another embodiment, the trigger of sending the not-yet-delivered data PDU indication may be the detection of RLF in either Uu or PC5 interface. For instance, if the relay UE detects RLF in the Uu interface while the PC5 connection is still alive, the relay UE may send to the remote UE the not-yet-delivered data PDU indication for the UL data transmission. In this example, no indication may need to be sent to the gNB for DL data transmission as the PC5 connection may still be alive and the relay UE can send any already-received DL data to the remote UE without any issue.

As another embodiment, the trigger of the sending the not-yet-delivered data PDU indication may be the detection of an amount of not-yet-delivered data PDUs above configured threshold(s). The threshold(s) may be configured from the gNB using dedicated RRC signaling or broadcasted system information block (SIB). More than one thresholds may be configured and each threshold may be associated with a Uu or SL link quality, such as reference signal received power (RSRP) range. As another option, one additional Uu or SL RSRP threshold may be configured together with the not-yet-delivered data amount threshold. The relay UE may be triggered to send the not-yet-delivered data PDU indication only if the amount of not-yet-delivered data PDUs above the corresponding threshold and the Uu or SL link RSRP is lower than the corresponding threshold. The configured threshold may be either relay UE specific, remote UE specific or each radio bearer (RB) specific or Uu/PC5-RLC channel specific.

The not-yet-delivered data PDU indication may simply be a one-bit indication to show there is still data buffered in the relay UE and that the data has been acknowledged to the gNB or the remote UE in the first hop and has not yet been delivered to the remote UE or the gNB in the second hop. With the one-bit indication, at 155 the gNB may determine that all the buffered DL PDCP SDUs should be forwarded to the target gNB and may initiate data forwarding at 160. For instance, even the transmitted DL PDCP SDUs have been acknowledged by the lower layer when they were transmitted to the relay UE, the source gNB may still forward those DL PDCP SDUs to the target gNB if the not-yet-delivered data PDU indication indicates there is still data have not been delivered to the remote UE successfully. Similarly, the remote UE can also determine that all buffered UL PDCP SDUs should be retransmitted to the target gNB after successful path switching.

As one option, the gNB may have buffered the data and may simply forward to the target gNB from the source gNB's own buffers. Alternatively, if the source gNB has already discarded the data because of the acknowledgment from the relay UE, the relay UE may provide the data to the source gNB for forwarding to the target gNB or for re-transmission over a direct path to the remote UE.

The not-yet-delivered data PDU indication at 145 and/or 150 may include further information, such as at least one of the following: the number of TBs that are received from the first hop and still buffered in the relay UE; a list of RLC SNs that correspond to the RLC PDUs have been received from the first hop but are still buffered in the relay UE; or the earliest RLC SN that corresponds to the first RLC PDU has been received from the first hop but is still buffered in the relay UE.

Based on the provided further information in not-yet-delivered data PDU indication, at 155 the gNB or at 175 the remote UE can determine which DL or UL PDCP SDUs have not yet been delivered to the final receiving entity even though they are acknowledged by the relay UE on the reception in the first hop. Thus, the gNB or the remote UE can forward or retransmit PDCP SDUs accordingly for lossless delivery during indirect path switching. If desired, as mentioned above, the relay UE may assist by providing the buffered data back to the transmitting device, particularly in case the transmitting device may no longer have the data buffered.

At 165, a random access channel (RACH) may be performed to allow the remote UE to connect to the target gNB. After RRC reconfiguration is complete at 170, the remote UE can determine UL PDCP SDU retransmissions based on the indication the relay UE. At 180, the PDCP SDU retransmissions may take place.

Thus, FIG. 1 illustrates an example implementation, which may be applicable to the scenario A case mentioned above. Similar approaches may be applied to scenarios C and D. One difference is the retransmitted PDCP SDUs from the remote UE can be sent via a new relay UE instead of directly to the gNB.

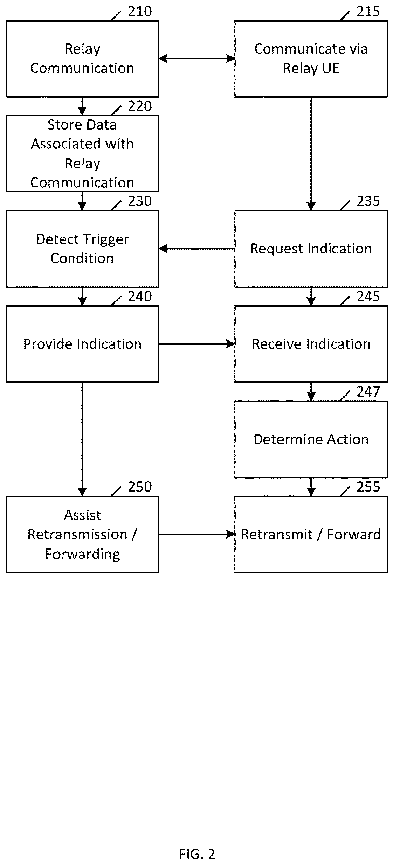

FIG. 2 illustrates a method according to certain embodiments. As shown in FIG. 2, at 210, a relay UE can communicate with a remote user equipment or a radio access network element over a first link and forward/relay the communication over a second link. The relay UE can also, at 220, store data associated with the communication after acknowledging the reception of the data to a transmitting entity of the remote user equipment or the radio access network element, and before receiving confirmation of delivery to a receiving entity of the remote user equipment or the radio access network element. This storing can also be referred to as buffering. There is no limitation on the type of memory used or the memory techniques employed by the relay equipment. Thus, storing or buffering can refer to the same temporary holding of data that is to be relayed from the relay UE to a receiving entity from a transmitting entity. For example, when the gNB is the transmitting entity, the remote UE may be the receiving entity, and vice versa.

The relay user equipment can, at 230, detect a trigger condition associated with the communication. Accordingly, at 240, the relay UE can provide an indication to the transmitting entity that the data is stored in the apparatus. The relay UE can also take further action, such as purging the buffer and/or at 250 assisting retransmission and/or forwarding of the stored data.

As mentioned above, the trigger condition can be radio link failure of the first link or the second link. The terms first link and second link may simply be used to distinguish two different links, without any indication of order, preference, or priority.

The trigger condition can include a buffered but not delivered amount for the first link, the second link, or a combination of the first link and the second link exceeds a configured threshold. The amount may be measured in terms of transport blocks, PDUs, bytes, or any other measure of data. The amount may be measured in terms of a fill level of a buffer available in the relay UE for relay communications.

The trigger condition can include receiving a configuration to release an existing channel configuration associated with the remote user equipment, or receiving an instruction to provide the indication.

The indication can include a one-bit indication that indicates that the data has not been delivered to the receiving entity. Additionally, the indication can include a level of the data that has not been delivered, such as an amount of stored data or a SN of the last successfully delivered or first unsuccessfully delivered PDU.

The providing the indication at 240 can include providing the indication in at least one of UCI, SCI, a MAC CE or a RRC control signaling. The providing the indication at 240 can include providing a first indication over the first link to the remote user equipment and providing a second indication over the second link to the radio access network element or vice versa For example, if the trigger is not detection of a radio link failure, both indications may be provided.

The above procedures may be performed by a relay UE. Additional procedures may be performed by a gNB and/or remote UE. For example, the method can include, at 215, communicating via the relay user equipment, which relays the communication between the remote user equipment and the radio access network element over first link and the second link. Data associated with the communication can be stored at the relay user equipment as described with reference to 220 above. The method can also include, at 245, receiving an indication that the data is stored in the apparatus. The method can also include at, 247, determining whether to perform a further action. The further action can be, at 255, data forwarding or retransmission based on the indication. Other actions, such as instructing, at 235, the relay UE to provide the indication, can also be performed.

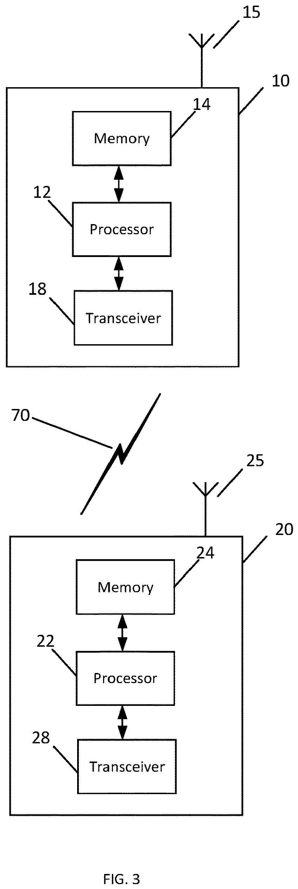

FIG. 3 illustrates an example of a system that includes an apparatus 10, according to an embodiment. In an embodiment, apparatus 10 may be a node, host, or server in a communications network or serving such a network. For example, apparatus 10 may be a network node, satellite, base station, a Node B, an evolved Node B (eNB), 5G Node B or access point, next generation Node B (NG-NB or gNB), TRP, HAPS, integrated access and backhaul (IAB) node, and/or a WLAN access point, associated with a radio access network, such as a LTE network, 5G or NR. In some example embodiments, apparatus 10 may be gNB or other similar radio node, for instance.

It should be understood that, in some example embodiments, apparatus 10 may include an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a mid-haul interface, referred to as an F1 interface, and the DU(s) may have one or more radio unit (RU) connected with the DU(s) over a front-haul interface. The DU may be a logical node that includes a subset of the gNB functions, depending on the functional split option. It should be noted that one of ordinary skill in the art would understand that apparatus 10 may include components or features not shown in FIG. 3.

As illustrated in the example of FIG. 3, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, or any other processing means, as examples. While a single processor 12 is shown in FIG. 3, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to handling lossless data delivery during indirect path switching of sidelink based user equipment to network relay.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be include any combination of random access memory (RAM), read only memory (ROM), static storage such as a magnetic or optical disk, hard disk drive (HDD), or any other type of non-transitory machine or computer readable media, or other appropriate storing means. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15, or may include any other appropriate transceiving means. The radio interfaces may correspond to a plurality of radio access technologies including one or more of global system for mobile communications (GSM), narrow band Internet of Things (NB-IoT), LTE, 5G, WLAN, Bluetooth (BT), Bluetooth Low Energy (BT-LE), near-field communication (NFC), radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (via an uplink, for example).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device), or an input/output means.

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry/means or control circuitry/means. In addition, in some embodiments, transceiver 18 may be included in or may form a part of transceiver circuitry/means.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be or may be a part of a network element or RAN node, such as a base station, access point, Node B, eNB, gNB, TRP, HAPS, IAB node, relay node, WLAN access point, satellite, or the like. In one example embodiment, apparatus 10 may be a gNB or other radio node, or may be a CU and/or DU of a gNB. According to certain embodiments, apparatus 10 may be controlled by memory 14 and processor 12 to perform the functions associated with any of the embodiments described herein. For example, in some embodiments, apparatus 10 may be configured to perform one or more of the processes depicted in any of the flow charts or signaling diagrams described herein, such as those illustrated in FIGs. 1 and 2, or any other method described herein. In some embodiments, as discussed herein, apparatus 10 may be configured to perform a procedure relating to providing handling lossless data delivery during indirect path switching of sidelink based user equipment to network relay, for example.

FIG. 3 further illustrates an example of an apparatus 20, according to an embodiment. In an embodiment, apparatus 20 may be a node or element in a communications network or associated with such a network, such as a UE, communication node, mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, a watch or other wearable, a head-mounted display (HMD), a vehicle, a drone, a medical device and applications thereof (e.g., remote surgery), an industrial device and applications thereof (e.g., a robot and/or other wireless devices operating in an industrial and/or an automated processing chain context), a consumer electronics device, a device operating on commercial and/or industrial wireless networks, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in FIG. 3.

As illustrated in the example of FIG. 3, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 3, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can include any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDM symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, SL UE, relay UE, mobile device, mobile station, ME, IoT device and/or NB-IoT device, or the like, for example. According to certain embodiments, apparatus 20 may be controlled by memory 24 and processor 22 to perform the functions associated with any of the embodiments described herein, such as one or more of the operations illustrated in, or described with respect to, FIGs. 1 and 2, or any other method described herein. For example, in an embodiment, apparatus 20 may be controlled to perform a process relating to providing handling lossless data delivery during indirect path switching of sidelink based user equipment to network relay, as described in detail elsewhere herein.

In some embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of any of the operations discussed herein.

In view of the foregoing, certain example embodiments provide several technological improvements, enhancements, and/or advantages over existing technological processes and constitute an improvement at least to the technological field of wireless network control and/or management. Certain embodiments may have various benefits and/or advantages. For example, in certain embodiments may allow data delivery to be lossless even in scenarios where there is indirect path switching of SL-based U2N relay. Thus, improved permance of communication may be obtained.

In some example embodiments, the functionality of any of the methods, processes, signaling diagrams, algorithms or flow charts described herein may be implemented by software and/or computer program code or portions of code stored in memory or other computer readable or tangible media, and may be executed by a processor.

In some example embodiments, an apparatus may include or be associated with at least one software application, module, unit or entity configured as arithmetic operation(s), or as a program or portions of programs (including an added or updated software routine), which may be executed by at least one operation processor or controller. Programs, also called program products or computer programs, including software routines, applets and macros, may be stored in any apparatus-readable data storage medium and may include program instructions to perform particular tasks. A computer program product may include one or more computer-executable components which, when the program is run, are configured to carry out some example embodiments. The one or more computer-executable components may be at least one software code or portions of code. Modifications and configurations required for implementing the functionality of an example embodiment may be performed as routine(s), which may be implemented as added or updated software routine(s). In one example, software routine(s) may be downloaded into the apparatus.

As an example, software or computer program code or portions of code may be in source code form, object code form, or in some intermediate form, and may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium. The term "non-transitory" as used herein, is a limitation of the medium itself (i.e. tangible, not a signal) as opposed to a limitation on data storage persistency (e.g. RAM vs. ROM).

In other example embodiments, the functionality of example embodiments may be performed by hardware or circuitry included in an apparatus, for example through the use of an application specific integrated circuit (ASIC), a programmable gate array (PGA), a field programmable gate array (FPGA), or any other combination of hardware and software. In yet another example embodiment, the functionality of example embodiments may be implemented as a signal, such as a non-tangible means, that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein may apply to both singular and plural implementations, regardless of whether singular or plural language is used in connection with describing certain embodiments. For example, an embodiment that describes operations of a single network node may also apply to example embodiments that include multiple instances of the network node, and vice versa.

One having ordinary skill in the art will readily understand that the example embodiments as discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of example embodiments.

### PARTIAL GLOSSARY:

- DL: DownLink
- HO: HandOver
- PDCP: Packet Data Convergence Protocol
- PDU: Packet Data Unit
- RLC: Radio Link Control
- RLF: Radio Link Failure
- RRC: Radio Resource Control
- SDU: Service Data Unit
- SL: SideLink
- TB: Transport Block
- U2N: UE-to-Network
- UE: User Equipment
- UL: Uplink

## Claims

1. A method, comprising:
relaying communication between a remote user equipment and an access network entity via a relay user equipment over a first link between the remote user equipment and the relay user equipment and a second link between the relay user equipment and the access network entity;
storing data associated with the communication after acknowledging the reception of the data to a transmitting entity of one of the remote user equipment and the access network entity, and before receiving confirmation of delivery to a receiving entity of one of the remote user equipment and the access network entity;
detecting a trigger condition associated with the communication is met; and
providing an indication to the transmitting entity indicating that the data stored in the relay user equipment has been acknowledged to the transmitting entity but has not been confirmed by the receiving entity.

2. A method, comprising:
communicating via a relay user equipment, which relays communication between a remote user equipment and an access network element over a first link and a second link, wherein data associated with the communication is stored at the relay user equipment after acknowledging the reception of the data to a transmitting entity of one of the remote user equipment and the access network element, and before receiving confirmation of delivery to a receiving entity of one of the remote user equipment and the access network element;
receiving an indication that the data is stored in the relay user equipment; and
determining a further action comprising data forwarding or retransmission based on the indication.

3. An apparatus, comprising:
means for relaying communication between a remote user equipment and an access network entity via the apparatus over a first link between the remote user equipment and the apparatus and a second link between the apparatus and the access network entity;
means for storing data associated with the communication after acknowledging the reception of the data to a transmitting entity of one of the remote user equipment and the access network entity, and before receiving confirmation of delivery to a receiving entity of one of the remote user equipment and the access network entity;
means for detecting a trigger condition associated with the communication is met; and
means for providing an indication to the transmitting entity indicating that the data stored in the apparatus has been acknowledged to the transmitting entity but has not been confirmed by the receiving entity.

4. The apparatus of claim 3, wherein the trigger condition comprises radio link failure of the first link or the second link.

5. The apparatus of claim 3, wherein the trigger condition comprises a buffered but not delivered amount of the stored data for the first link, the second link, or a combination of the first link and the second link exceeds a configured threshold.

6. The apparatus of claim 3, wherein the trigger condition comprises receiving a configuration to release an existing channel configuration associated with the remote user equipment.

7. The apparatus of claim 3, wherein the trigger condition comprises receiving an instruction to provide the indication.

8. The apparatus of any one of claims 3-7, wherein the indication comprises a one-bit indication that indicates that the data has been acknowledged to the transmitting entity but has not been confirmed by the receiving entity.

9. The apparatus of any one of claims 3-7, wherein the indication comprises a level of the data that has not been delivered, and wherein the level of the data comprises a number of transport blocks, a list of sequence numbers, and/or an earliest sequence number of the stored data that is buffered but not delivered.

10. The apparatus of any one of claims 3-9, wherein the providing the indication comprises providing the indication in at least one of uplink control information, sidelink control information, a control element of medium access control or a radio resource control singaling message; and
wherein the providing the indication comprises providing a first indication over the first link and providing a second indication over the second link.

11. An apparatus, comprising:
means for communicating via a relay user equipment, which relays communication between a remote user equipment and an access network element over a first link and a second link, wherein data associated with the communication is stored at the relay user equipment after acknowledging the reception of the data to a transmitting entity of one of the remote user equipment and the access network element, and before receiving confirmation of delivery to a receiving entity of one of the remote user equipment and the access network element;
means for receiving an indication that the data is stored in the relay user equipment; and
means for determining a further action comprising data forwarding or retransmission based on the indication.

12. The apparatus of claim 11, wherein the indication comprises a one-bit indication that indicates that the data has not been delivered to the receiving entity.

13. The apparatus of claim 11, wherein the indication comprises a level of the data that has not been delivered, and wherein the level of the data comprises a number of transport blocks, a list of sequence numbers, and/or an earliest sequence number of the stored data that is buffered but not delivered.

14. The apparatus of any one of claims 11-13, wherein the providing the indication comprises providing the indication in at least one of uplink control information, sidelink control information, a control element of medium access control or a radio resource control singaling message.

15. The apparatus of any one of claims 11-14, further comprising:
means for instructing the relay user equipment to provide the indication, wherein the indication is provided responsive to the instructing.
